(19) Europäisches Patentamt
European Patent Office
Office européen des brevets

(11) Publication number: **0 437 707 A1**

# (12) EUROPEAN PATENT APPLICATION

(21) Application number: **90122595.3**

(22) Date of filing: **27.11.90**

(51) Int. Cl.5: **C08K 5/10**, C08K 5/11, C08L 69/00, //(C08L69/00,55:02)

The title of the invention has been amended (Guidelines for Examination in the EPO, A-III, 7.3).

(30) Priority: **28.12.89 US 464992**

(43) Date of publication of application: **24.07.91 Bulletin 91/30**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **Hovatter, Thomas Wayne**
**1200 Tanglewood Drive**
**Mt Vernon, Indiana 47620(US)**
Inventor: **Claesen, Christianus Adrianus Arnoldus**
**Zandstraat 11**
**NL-4614 CA Bergen op Zoom(NL)**
Inventor: **Savenije, Hermanus Bernadus**
**Lindebaan 39**
**NL-4611 LW Bergen op Zoom(NL)**

(74) Representative: **Catherine, Alain**
**General Electric France Service de Propriété Industrielle 18 Rue Horace Vernet**
**F-92136 Issy-Les-Moulineaux Cedex(FR)**

## (54) Polycarbonate resin compositions containing mould release agents.

(57) A composition comprising an admixture of (a) an aromatic polycarbonate (b) an impact modifying quantity of an ABS or ABS type resin, and (c) a mold release and plasticizing effective amount of an ester of an aliphatic carboxylic acid of 6 to about 9 carbon atoms and a tetrahydric alcohol.

EP 0 437 707 A1

# COMPOSITION

## BACKGROUND OF THE INVENTION

Useful articles from various thermoplastic resins have been prepared from molds for many years. Injection molding provides a convenient way for preparing various articles from thermoplastic resins, particularly objects of a relatively intricate nature. In order to injection mold articles in an economic manner, the mold resident cycle time should be kept to a minimum. This shorter cycle time provides a shorter resin heat period with consequently less thermal damage to the resin itself and/or less thermally promoted interaction between the resin and various additives present in the resin. In order to accomplish a release of the resin from the mold, various mold release agents have been found which provide for a release of the resin with lower ejection pressure. Such an agent should be chemically compatible with the resin as measured by the usual characteristics of the resin under normal conditions and heat treatments.

Additionally, it is also helpful to provide plasticization if at all possible. By plasticization is meant better melt flow of the thermoplastic resin. This plasticization should be preferably achieved without any significant lowering of any of the physical properties of the resin. With respect to polycarbonates, examples of the physical properties which should be substantially unchanged are light transmission, impact resistance, delamination and toughness of the material.

Esters prepared from monocarboxylic acids and multihydric alcohols have long been known as mold release agents for polycarbonate. For example USP 3,784,595 discloses the use of esters of trihydric alcohols and aliphatic carboxylic acids with 10 carbon atoms or more at levels of 0.1 to 2 wt. % of polycarbonate. DE2729485 discloses the use of esters of tetrahydric alcohols and carboxylic acids with 6 carbon atoms or more for mold release of polycarbonate at levels of 0.1 to 3 wt. %.

Aliphatic acid esters as plasticisers for polycarbonate have been disclosed in USP 3,186,961. Only esters having up to 22 carbon atoms and derived from $C_2$ to $C_{18}$ aliphatic carboxylic acids and $C_1$ to $C_6$ monohydric alcohols are disclosed. The only working examples of the esters disclosed in the patent are directed to aromatic esters. Furthermore a very special process for compounding these materials in sufficiently high concentrations is suggested. In the DE2729485, and USP 3,784,595, the major examples utilizing the multihydric alcohols were with the ester prepared from stearic acid. In the DE patent, the highest weight percentage of ester actually employed in the examples was 0.3 wt.%.

It is also well known that various phosphates plasticize polycarbonates so as to provide better flow. However the use of phosphates is not preferred because of certain environmental problems which may occur. Acrylonitrite-butadiene-styrene, ABS, or ABS type resins also have similar problems with respect to moldability and/or plasticization. USP 4,174,325 discloses the use of ABS with 0.1 to 10 wt.% of at least one ester of an aliphatic saturated $C_{10}$ to $C_{22}$ monocarboxylic acid and an aliphatic or aromatic hydroxy compound having 1 to 6 hydroxyl groups as a processing auxiliary. Pentaerythrityltetrasterate (PETS) is used in specific examples.

Blends of polycarbonate and ABS or ABS type resins have been known for many years. Mold release is also an issue with respect to these blends. PETS has been utilized as a mold release agent in these blends. A recent European patent application EP 248308 has disclosed that polycarbonate ABS blends have a different melt behavior compared to pure polycarbonate. It also discloses that such blends can have enhanced mold release with the addition of an ester of saturated aliphatic $C_{10}$-$C_{22}$ carboxylic acids and trihydric alcohol. There is one example in the application which utilizes trimethylol propane tristearate. In the description it is further stated that the composition can comprise further release agents such as PETS.

It has now been discovered that the usage of lower carbon atom aliphatic acid esters than employed previously brings about substantially better mold release for blends of polycarbonate and ABS and ABS like materials than the stearic acid esters of tetrahydric alcohols, particularly pentaerythrityltetrastearate. This is accomplished while having a substantial plasticizing effect on the composition but without delamination of the molded part.

## SUMMARY OF THE INVENTION

In accordance with the invention there is a composition comprising an admixture of (a) aromatic polycarbonate (b) an impact modifying quantity of an ABS or ABS type resin, and (c) a mold release and plasticizing effective amount of an ester of an aliphatic carboxylic acid of 6 to 9 carbon atoms and an aliphatic tetrahydric alcohol.

Preferably absent or essentially absent from the admixture is an ester of a trihydric alcohol and a

saturated monocarboxylic acid of $C_{10}$ to $C_{22}$ acids.

DETAILED DESCRIPTION OF THE INVENTION

The aromatic polycarbonates useful in the invention are the usual aromatic polycarbonates well known in the literature for many years. The aromatic polycarbonates are prepared from the reaction of a dihydric phenol and a carbonate precursor. The dihydric phenols useful in preparing the aromatic polycarbonates include those of the formula.

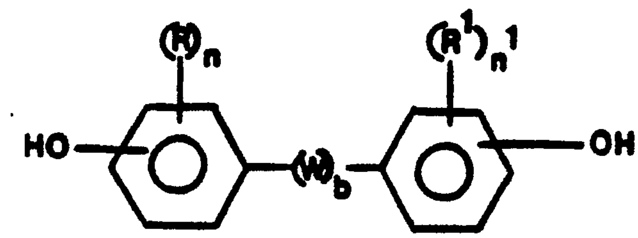

wherein:
R is independently selected from halogen, monovalent hydrocarbon, and monovalent hydrocarbonoxy radicals;
$R^1$ is independently selected from halogen, monovalent hydrocarbon, and monovalent hydrocarbonoxy radicals;
W is selected from divalent hydrocarbon radicals,

$$-S-,\ -S-S-,\ -O-,\ -\overset{O}{\overset{\|}{S}}-,\ -\underset{\underset{O}{\|}}{\overset{O}{\overset{\|}{S}}}-,\ \text{and}\ -\overset{O}{\overset{\|}{C}}-;$$

n and $n^1$ are independently selected from integers having a value of from 0 to 4 inclusive; and
b is either zero or one.

The monovalent hydrocarbon radicals represented by R and $R^1$ include the alkyl, cycloalkyl, aryl, aralkyl and alkaryl radicals. The preferred alkyl radicals are those containing from 1 to about 12 carbon atoms. The preferred cycloalkyl radicals are those containing from 4 to about 8 ring carbon atoms. The preferred aryl radicals are those containing from 6 to 12 ring carbon atoms, i.e., phenyl, naphthyl, and biphenyl. The preferred alkaryl and aralkyl radicals are those containing from 7 to about 14 carbon atoms.

The preferred halogen radicals represented by R and $R^1$ are chlorine and bromine.

The divalent hydrocarbon radicals represented by W include the alkylene, alkylidene, cycloalkylene and cycloalkylidene radicals. The preferred alkylene radicals are those containing from 2 to about 30 carbon atoms. The preferred alkylidene radicals are those containing from 1 to about 30 carbon atoms. The preferred cycloalkylene and cycloalkylidene radicals are those containing from 6 to about 16 ring carbon atoms.

The monovalent hydrocarbonoxy radicals represented by R and $R^1$ may be represented by the formula - $OR^2$ wherein $R^2$ is a monovalent hydrocarbon radical of the type described hereinafore. Preferred monovalent hydrocarbonoxy radicals are the alkoxy and aryloxy radicals.

Some illustrative non-limiting examples of the dihydric phenols falling within the scope of Formula II include:
2,2-bis(4-hydroxyphenyl)propane (bisphenol-A);
2,2-bis(3,5-dibromo-4-hydroxyphenyl)propane;
2,2-bis(3,5-dimethyl-4-hydroxyphenyl)propane;
1,1-bis(4-hydroxyphenyl)cyclohexane;
1,1-bis(3,5-dimethyl-4-hydroxyphenyl)cyclohexane;
1,1-bis(4-hydroxyphenyl)decane;
1,4-bis(4-hydroxyphenyl)propane;
1,1-bis(4-hydroxyphenyl)cyclododecane;
1,1-bis(3,5-dimethyl-4-hydroxyphenyl)cyclododecane;

4,4 -dihydroxydiphenyl ether;
4,4 -thiodiphenol;
4,4 -dihydroxy-3,3 -dichlorodiphenyl ether; and
4,4 -dihydroxy-2,5-dihydroxydiphenyl ether.

Other useful dihydric phenols which are also suitable for use in the preparation of the above polycarbonates are disclosed in U.S. Patent Nos. 2,999,835; 3,028,365; 3,334,154; and 4,131,575, all of which are incorporated herein by reference.

The carbonate precursor utilized in the invention can be any of the standard carbonate precursors such as phosgene, diphenyl carbonate and the like. When using an interfacial process or a bischlorolformate process it is also preferred to use a standard catalyst system well known in the synthesis of polycarbonates and copolyestercarbonates. A typical catalyst system is that of an amine system such as tertiaryamine, amidine or guanidine. Tertiaryamines are generally employed in such reactions. Trialkylamines such as triethylamine are generally preferred.

The ABS composition or ABS type composition which is employed in this invention is the usual standard ABS compositions known throughout the industry. An ABS or ABS type composition comprisies from (a) about 10 to 90 weight percent of a mixture of acrylonitrile and styrene or alpha-methyl styrene wherein the acrylonitrile is from about 10 to 50 weight percent of the reactant mixture and the styrene and/or alpha-methyl styrene is from about 50 to 90 weight percent of the reactant and (b) about 90 to 10 weight percent of polybutadiene or polyisoprene, preferably polybutadiene. Of course, copolymers of acrylonitrile and styrene and/or alphamethyl styrene are also present in the ABS type material. Additionally wherein acrylonitrile is used either some or all of the acrylonitrile can be replaced with methylmethacrylate. The preferred resins are acrylonitrile butadiene styrene (ABS) or methylmethacrylate butadiene styrene (MBS). With respect to MBS a preferred core configuration is coreshell. These resins may be made by any of the well known methods including suspension polymerization, bulk polymerization, or bulk suspension polymerization.

Copolymer of the ABS or ABS type resin without the rubbery monomer can also be present as additional copolymer added to the ABS or ABS type resin. Examples of such copolymers include polystyreneacrylonitrile, polyalphamethylstyreneacrylonitrile and polystyrenemethylmethacrylate. The quantities can vary from about 1 to 50 wt. percent of total of polycarbonate plus ABS or ABS type resin plus copolymer.

Esters which are effective in accordance with the invention are the reaction products of tetrahydric alcohols with aliphatic carboxylic acids having about 6 to 9 carbon atoms.

The quantity of ABS or ABS type resin which can be present in the admixtures is any quantity which impact modifies the polycarbonate. Generally a minimum of about 3 wt. %, preferably 4 wt. % will impact modify the polycarbonate. Wt. percent ABS is measured as percent of polycarbonate and ABS or ABS type resin. Up to about 95 wt. % ABS or ABS type resin can be employed. Generally, quantities of ABS or ABS type resin of from about 5 to 75 wt. %, more preferably about 7 to about 60 wt. %. Also particularly useful are quantities of ABS or ABS type resin of from about 7 to 20 wt. %.

Examples of tetrahydric alcohols include various alcohols preferably having between 4 and 16 carbon atoms, more preferably between 4 and 8 carbon atoms. Examples of tetrahydric alcohols include erythritol, mesoerythritol and pentaerythritol. The aliphatic carboxylic acids from 6 to 9 carbon atoms are illustratively exemplified by caproic acid, caprylic acid, and pelargonic acid and the like. These acids can be optionally used together with polycarboxylic aliphatic acids for example those with 6 to 9 carbon atoms. Examples of the polycarboxylic acids include suberic, azelaic, adipic and pimelic.

Illustrative examples of esters to be used according to the invention are pentaerythritoltetrapelargonate, trimethylolpropanetripelargonate, glyceroltricaprylate, pentaerythritoltetracaprylate, trimethylopropyltriadipate and the like.

The carboxylic acid esters to be used according to the invention are prepared according to customary processes, for example, in accordance with the Einhorn process using pyridine as the acid-binding agent, from alcohol and acid chloride in an inert solvent, or in the melt from the alochol and acid with or without esterification catalysts such as, for example, p-toluenesulphonic acid. The esterification is carried out at 200-250 °C. Such processes are described, for example, in "Houben-Weyl, Methoden der organischen Chemie (Methods of Organic Chemistry), Georg Thieme Verlag, Stuttgart, 1952, 4th Edition, Volume VIII, page 516 et. seq.

The quantity of the ester to be used in the aromatic polycarbonate ABS, ABS type resin admixtures is a mold release and plasticizing effective amount. Generally this is from about 0.2 to about 8 wt. % of the ester as measured on the basis of the polycarbonate and ABS or ABS type resin plus any non rubber containing copolymer comprising the other comonomers of the ABS or ABS type resin. Such copolymer

include for example polystyreneacrylonitrile, polyalphamethylstyreneacrylonitrile, polystyrenemethylmethacrylate. Preferred quantities are from about 0.5 to about 6 wt.% of the ester. Generally in the range of from about 0.5 to about 3 wt.% of the ester, there is significant mold release activity. Surprisingly as the weight percent ester increases, the composition physical properties such as impact resistance and delamination are largely unaffected. However the processability of the material as measured by its melt viscosity, (280°C/ 1150 DEC-1) increases substantially. It is interesting to note that the standard mold release agent, pentaerythrityltetrastearate (PETS) brings about significant delamination and reduction in impact strength at reduced temperature when the PETS is utilized at higher weight percentages such as 3%.

The incorporation of the carboxylic acid esters into the high molecular weight, thermoplastic polycarbonate admixtures is effected by standard techniques, for example, by adding the substances, which are normally in the form of a powder, onto the granules of the polycarbonate by tumbling and subsequently extruding the material on a twin-screw extruder at 280°C to form a ribbon, which is then granulated. Mixing in a Brabender blender is also effective. However, the mold release agent can also be incorporated during manufacture of the solid polycarbonate. In that case the ester is either admixed, as a solution in a solvent, with the polycarbonate solution before reaching a devolatilization screw, or is metered, without solvent, into the polycarbonate melt. The mold release agent can be added to the ABS or ABS type resin or extruded together with both the polycarbonate and ABS or ABS type resin.

Below are examples of the invention. All of these examples utilize a bisphenol-A polycarbonate.

All polycarbonate compounds were dry blended in a Papenmeijer blender (all additives added at once) together with an ABS with 50 wt.% butadiene, 15 wt.% acrylonitrile and 35 wt.% percent styrene which had been blended with polystyrene acrylonitrile copolymer with wt.% ratio of 72/28 styrene/acrylonitrile.

The ABS and poly SAN are blended together in a weight ratio of 42% ABS and 58% SAN.

The polycarbonate, ABS and SAN were subsequently extruded at a melt temperature of 260°C (settings 220-250C) on a Werner Pfleiderer 30 extruder. Materials were then injection molded at 270C melt/60C mold temperature. The PC/ABS + SAN wt.% was 57/43 in all examples.

Melt volume indices were determined with a Zwick type 4105.01.

Delamination was judged from visual inspection of an izod bar failure surface, as well as by making incisions in molded discs and subsequently trying to peel off the skin. N is none. Y is yes.

Release performance was checked by injection molding a 20x30cm fuse box lid on a Battenfeld injection molding machine. Easy release (part comes off immediately as the ejector pins push) = + +, part comes off, but with some noise = +, part does not readily come off, and deforms severely = --.

COMPARATIVE EXAMPLES

| | Control | A | B | C | 1 | 2 | 3 | 4 |
|---|---|---|---|---|---|---|---|---|
| Triaryl phosphate | - | 3 | 6 | - | - | - | - | - |
| PETS* | - | - | - | 3 | - | - | - | - |
| PETP** | - | - | - | - | 0.5 | 1.5 | 3 | 6 |
| Melt viscosity (280C/1150s$^{-1}$) | 210 | 190 | 170 | 185 | 205 | 195 | 180 | 164 |
| Izod Notched Impact, J/m RT: | 590 | 585 | 560 | 575 | 580 | 575 | 584 | 580 |
| -40C: | 325 | 158 | 110 | 180 | 330 | 310 | 300 | 220 |
| Delamination | N | N | N | Y | N | N | N | N |
| Release Performance | - - | -- | -- | ++ | + | ++ | ++ | ++ |

* Pentaerythrityltetrastearate ($C_{18}$ acid)

** Pentaerythrityltetrapelargonate ($C_9$ acid)

As is readily shown in the preceding Table, a typical plasticizer, triarylphosphate, decreased the melt viscosity but did not show any mold release activity. Additionally, the low temperature impact resistance of the blend was reduced in comparison to the blend wherein no plasticizer was present. At a level of 3 wt. % , PETS demonstrated significant plasticization activity but was also accompanied by severely reduced low temperature impact resistance. Although good mold release performance was observed, delamination of the molded piece occurred. The PETP was a superior additive at the tested properties of the Table. Melt

viscosity is significantly lowered. However, the low temperature impact resistance is significantly retained. While bringing about good mold release, the integrity of the molded part is maintained since no delamination occurs.

## Claims

1. A composition comprising an admixture of (a) an aromatic polycarbonate (b) an impact modifying quantity of an ABS or ABS type resin, and (c) a mold release and plasticizing effective amount of an ester of an aliphatic carboxylic acid of 6 to about 9 carbon atoms and a tetrahydric alcohol.

2. A composition comprising an admixture of (a) an aromatic polycarbonate, (b) an impact modifying amount of an ABS or ABS type resin and (c) about 0.2 to about 8 weight percent of an ester of an aliphatic carboxylic acid of 6 to about 9 carbon atoms and tetrahydric alcohol.

3. The composition in accordance with claim 2 wherein the tetrahydric alcohol is from 4 to about 16 carbon atoms.

4. The composition in accordance with claim 3 wherein the tetrahydric alcohol is from 4 to about 8 carbon atoms.

5. The composition in accordance with claim 4 wherein the alcohol is pentaerythritol.

6. The composition in accordance with claim 5 wherein the acid is pelargonic acid.

7. The composition in accordance with claim 1 wherein the polycarbonate is bisphenol-A polycarbonate.

8. The composition in accordance with claim 2 wherein the polycarbonate is bisphenol-A polycarbonate.

9. The composition in accordance with claim 1 wherein about 0.5 to 6 weight percent of the ester is present.

10. The composition in accordance with claim 2 wherein about 0.5 to 6 weight percent of the ester is present.

11. The composition in accordance with claim 1 wherein additional polystyreneacrylonitrile is present.

12. The composition in accordance with claim 2 whrerein additional polystyreneacrylonitrile is present.

European Patent Office

# EUROPEAN SEARCH REPORT

Application Number

**EP 90 12 2595**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-3 186 961 (J. SEARS)<br>* column 4, line 47 - column 5; claim 9 * | 1 | C 08<br>K 5/10<br>C 08 K 5/11<br>C 08 L 69/00 //<br>(C 08 L 69/00<br>C 08 L<br>C 08 L 55:02 ) |
| Y,D | FR-A-2 356 698 (GENERAL ELECTRIC COMPANY)<br>* page 2, lines 10 - 16 * * page 3, lines 15 - 17; claim 1 * | 1-12 | |
| Y,D | EP-A-0 023 291 (BAYER AG)<br>* page 15, lines 1 - 6; claims * | 1-12 | |
| A | EP-A-0 122 759 (HENKEL CORPORATION)<br>* claims; example 1 * | 1 | |

TECHNICAL FIELDS SEARCHED (Int. Cl.5)

C 08 K
C 08 L

The present search report has been drawn up for all claims

| Place of search | Date of completion of search | Examiner |
|---|---|---|
| The Hague | 03 April 91 | HOFFMANN K.W. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document